# EUROPEAN PATENT SPECIFICATION

(11) **EP 3 336 999 B1**
(45) Date of publication and mention of the grant of the patent: **18.09.2019**
(21) Application number: 17205913.1
(22) Date of filing: 07.12.2017
(51) Int. Cl.: H02J 3/38, H02J 7/00, H02J 7/34, H02J 9/06, F03D 80/60, F03D 7/02

(54) **DISCHARGING ARRANGEMENT FOR A WIND TURBINE**
ENTLADUNGSANORDNUNG FÜR EINE WINDTURBINE
AGENCEMENT DE DÉCHARGEMENT D'UNE ÉOLIENNE

(30) Priority: 16.12.2016 GB 201621427
(43) Date of publication of application: 20.06.2018
(73) Proprietor: Moog Unna GmbH, 59423 Unna (DE)
(72) Inventor: YAO, Kartik, Pudong New Area, Shanghai 201208 (CN); VETTER, Alf, 48317 Rinkerode (DE); DEGEN, Thomas, 59505 Bad Sassendorf (DE)
(74) Representative: Withers & Rogers

(56) References cited:
- EP-A1- 2 216 849
- EP-A1- 2 568 563
- EP-A2- 2 645 515
- WO-A1-2016/174233
- JP-A- 2011 120 423

## Description

### Field of the Invention

The present invention relates to cooling systems for pitch drive units in wind turbines, in particular cooling systems for use during discharge of a backup power supply.

### Background to the Invention

In wind turbines, it is known to provide one or more rotor blades, each rotor blade having an adjustable pitch angle. The pitch angle is typically controlled by using a pitch drive motor in a pitch drive unit. In emergency situations, it is known to alter the angles of the rotor blades using the pitch drive motors such that wind incident on the rotor blades induces little or no torque on the rotor blades and the blades themselves act as air brakes to slow the movement of the rotor. This is known as putting the blades in a feathering position. In order to be able to put the rotor blades into the feathering position in the event that a power supply to the wind turbine is lost, it is known to provide a backup power supply in the wind turbine (for example in the pitch drive unit), the backup power supply storing energy to power the pitch drive motors in the event of a power outage. Such backup power supplies typically store energy at very high voltages (for example 420 V) and may take the form of supercapacitors or batteries.

When service personal needs to enter a wind turbine the wind turbine has to be in a state that is safe for the service personal and fulfils at least a variety of minimum safety requirements, such as voltages of life parts are reduced to a level they do not cause a problem for a person. For this purpose the rotor blades of a wind turbine may be driven first into a feathering position, so that wind cannot turn the blades and then the wind turbine is disconnected from the power grid. Another issue, even if no life parts can be touched, is that the wind turbine must not retain any energy sufficient to accidently set actuators of the wind turbine in motion, which may harm the service personal that is close or in contact to actuated parts of the wind turbine. Thus for example emergency power supply and intermediate capacitors should be discharged to a sufficient extend before service personal enters hazardous zones of the wind turbine.

The arrangement for discharging the electrical energy storage could be part of a pitch drive, i.e. a drive that rotates the rotor blades of a wind turbine. It may be also part of a pitch drive system, which comprises a pitch drive for each rotor blade of a wind turbine. The arrangement may be especially arrange in a portable housing as a separate discharging device, which is taken by the maintenance personal to the wind turbines, in case the wind turbine is not equipped with a discharging arrangement of their own.

The backup power supply may be discharged through a resistor within the pitch system, the resistor dissipating energy as heat. In order to reduce the down time of the wind turbine (i.e. the time during which the wind turbine is not operational whilst maintenance procedures are carried out), it is desirable to discharge the backup power supply as quickly as possible, resulting in high levels of heating of the resistor. For example, it is known to discharge a backup power supply substantially completely in under 10 minutes.

EP2568563 (A1) relates to a discharge system of a stored energy for a construction machine, which includes the energy storage, an electric discharge device discharging energy stored in the energy storage, and an energy cooling portion increasing the heat dissipation capacity of the electric discharge device by cooling heat generated in the electric discharged device for a time when the energy stored in the energy storage is discharged to the electric discharge device.

### Summary of Invention

In order to mitigate at least some of the issues above, the present invention provides a pitch drive unit and a method for discharging a backup power supply as defined in the independent claims appended hereto. Preferred features of the inventions are described in the dependent claims.

In the preferred embodiment there is provided a wind turbine pitch drive unit comprising a backup power supply, a resistor, and a cooling fan arranged to provide an air flow over the resistor. The pitch drive unit is configured to discharge the backup power supply by: connecting the backup power supply to the resistor such that a current from the backup power supply flows through the resistor; disconnecting the backup power supply from the resistor when a voltage across the backup power supply reaches a first pre-determined threshold; and once the voltage has reached the first pre-determined threshold, powering the cooling fan with the backup power supply, thereby cooling the resistor and further discharging the backup power supply.

There is also preferably provided a method for discharging a backup power supply in a pitch drive unit comprising: connecting a backup power supply to a resistor; disconnecting the backup power supply from the resistor when a voltage across the backup power supply reaches a first pre-determined threshold; and once the voltage has reached the first predetermined threshold, power the cooling fan with the backup power supply thereby cooling the resistor and further discharging the backup power supply.

Advantageously, the present invention permits rapid discharge of the backup power supply through the resistor until the backup power supply reaches a certain voltage (for example, once the majority of the energy stored in the backup power supply has been discharged) whilst permitting additional cooling of the resistor once the backup power supply has been disconnected from the resistor. Accordingly, the present invention allows both for discharge of the backup power supply whilst reducing the temperature of the resistor (and therefore other components within the wind turbine), thereby further enhancing the safety of maintenance personnel within the wind turbine.

Preferably the cooling fan also provides an air flow over the resistor whilst the backup power supply is being discharged through the resistor, i.e. before the first pre-determined threshold voltage is reached. Preferably this is done by also allowing the cooling fan to draw a current from the backup power supply before the first pre-determined threshold is reached. Advantageously this reduces power consumption at the pitch drive unit by making use of charge from the backup power supply that would otherwise be dissipated as heat in the resistor, rather than use other sources to power the cooling fan.

In the preferred embodiment, the first threshold voltage is determined such that it corresponds to a level of remaining charge in the backup power supply to power the cooling fan for a time sufficient to adequately cool the resistor. For example the first threshold may be determined based on thermal testing of the system in worst case environmental conditions, and/or based on the amount of charge to be discharged through the resistor, and /or based on a measured temperature of the resistor. Accordingly the first threshold may be a fixed value or may be calculated dynamically before and/or during the discharge process. Optionally the first pre-determined threshold voltage may be determines by control logic present in the pitch drive unit. Accordingly the present invention advantageously allows the discharge process to be tailored to specific pitch drive units, backup charge and/or environmental conditions, thereby increasing the efficiency of the discharge process.

Preferably the discharge through the cooling fan continues until the voltage of the backup power supply reaches a second pre-determined voltage corresponding to either a minimum operating voltage of the cooling fan, a voltage satisfying safety requirements, or substantially 0 V.

Optionally, the current being discharged from the backup power supply through the resistor is reduced when the voltage reaches a third predetermined voltage, wherein the third predetermined voltage has a higher magnitude than the first predetermined voltage. For example, the current may be reduced by applying pulse width modulation for example by periodically connecting and disconnecting the resistor as is known in the art. Advantageously this reduces the amount of heat being generated in the resistor in the latter stages of the discharge operation and thus reduce the amount of cooling the cooling fan has to provide, however this also increases the overall time needed to perform the discharge.

The electrical energy storage to be discharged may be any electrical energy storage used in a wind turbine. Preferably all energy power sources should be discharged to prevent that actuators in a wind turbine may be energized or a person may touch life parts of which the voltage is so high that it is threat to the life of a person. At least one of an intermediate capacitor or a battery, or a capacitor used for emergency power supply are electrical energy storages which need to be discharged with the proposed arrangement.

### Brief Description of the Drawings

Detailed embodiments of the present invention will now be described, by way of example only, with reference to the accompanying drawings in which:
Figure 1A shows a schematic of a pitch drive unit in accordance with an embodiment of the present invention.
Figure 1B shows a schematic of a discharge apparatus in accordance with an embodiment of the present invention.
Figure 2 shows a flow diagram of a method for discharging a backup power supply in a wind turbine in accordance with the present invention.
Figure 3 shows a wind turbine with pitch drives in accordance with the present invention.

### Detailed Description

In the following description, like reference numerals refer to like elements throughout.

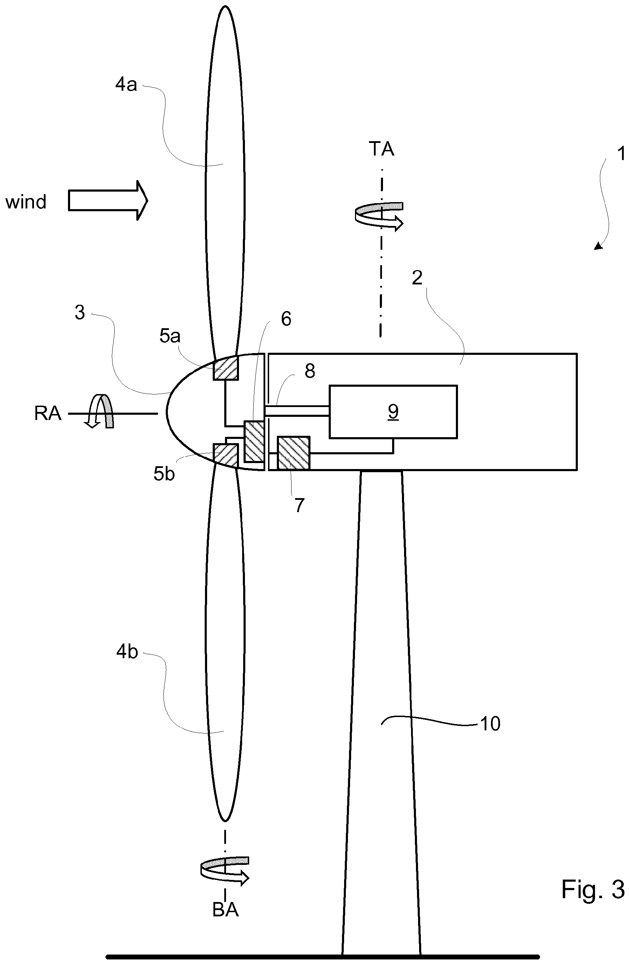

Figure 3 shows a side view of a wind turbine 1 according to the invention. The wind turbine 1 is used for converting a wind's kinetic energy into electrical energy. A tower 10, supporting a nacelle 2 and a rotor 3, 4a, 4b, is fixed to the ground. Evidently the invention is not limited to on-shore installations, where the tower is fixed to the ground but could also be used in connection with so-called off-shore installations where the tower is fixed to a structure in the sea or a structure floating in the sea. The rotor 3, 4a, 4b substantially comprises a hub 3 with three rotor blades 4a, 4b. The wind turbine 1 of this embodiment comprises three rotor blades 4a, 4b whereby in Figure 3 only two rotor blades 4a, 4b are visible. The third rotor blade is not visible as it happens to be concealed by the hub 3. The rotor 3, 4a, 4b is rotationally connected to the nacelle 2 by a substantially horizontally orientated generator shaft 8. A yaw drive (not shown) is used to rotate the nacelle 2 around its axis TA in order to keep the rotor 3, 4a, 4b facing into the wind as the wind direction changes. An electric current generator 9 coupled by the generator shaft 8 to the rotor 3, 4a, 4b produces electrical energy which may be fed into an energy distributing net (not shown).

Each rotor blade 4a, 4b can be pivoted by a pitch drive unit 5a, 5b. As the wind turbine 1 in this example has three rotor blades 4a, 4b, there are three pitch drive units 5a, 5b. Similarly to the third rotor blade, which is concealed by the hub 3, the third pitch drive unit is not shown in Figure 4. The three pitch drive units 5a, 5b are controlled by one common pitch system controller 6. Each pitch drive unit 5a, 5b turns each rotor blade 4a, 4b around a rotor blade axis BA. By turning the rotor blades 4a, 4b around their axis BA the angle of attack of the rotor blades 4a, 4b to the wind can be set to an angle substantially between 0 and 90 degrees. The angle of attack can be chosen thus that the rotor blades 4a, 4b even with strong wind produce no lift at all, or produce lift as a function of the wind speed. The produced lift is transformed into a rotation of the hub 3 around a rotor axis RA and eventually by the generator 9 into electrical energy.

A turbine controller 7 sends command to the pitch system controller 6 for continuously setting the pitch angle of each rotor blade 5a, 5b individually. Pitch angles and yaw angle of the nacelle eventually control the rotation speed of the rotor 3, 4a, 4b and thus also the amount of energy produced by the generator 9.

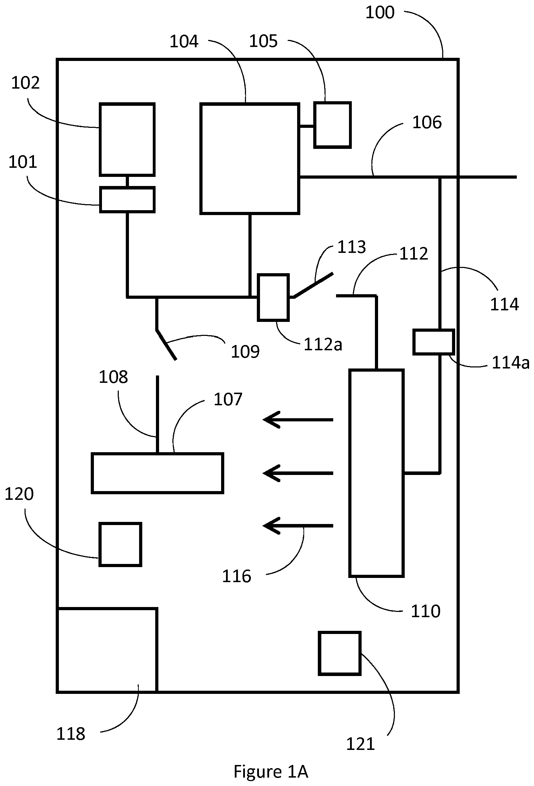

Figure 1A shows a schematic of a pitch drive unit in accordance with the preferred embodiment of the present invention. In the preferred embodiment of the invention there is provided a pitch drive unit 100 for use in a wind turbine 1. The pitch drive unit 100 comprises a pitch drive motor 102 and a backup power supply 104. The pitch drive motor may be an AC motor or a DC motor as is known in the art. The motor is controlled by a motor controller 101. The motor controller depends on the pitch drive motor 102 being used - for example if the pitch drive motor 102 is an AC motor, the motor controller 101 may be an H-bridge for providing 3 phase power to drive the motor, or another AC motor controller as is known in the art. Preferably, a supercapacitor (for example, a super capacitor having a capacitance of 2 F may be used for a pitch drive unit with an associated rotor blade being 110 m long) is provided as a backup power supply 104. Alternatively, backup power supply may be a battery such as a lithium ion battery or any other suitable energy storage device as is known in the art. In the following the backup power supply 104 is used as one example of an electrical energy storage that needs to be discharged. The person skilled in the art will appreciate that there might be various energy storages in a wind turbine that would need to be also discharged in a similar way to put the wind turbine in a safe state.

Backup power supply 104 has a charging connection 106 (for example a connection to a DC bus connected to a power grid via an AC/DC converter) that provides electricity from a power grid (not shown) to the backup power supply 104 for the purpose of charging the backup power supply 104. In the event of an emergency (for example a disruption to the power supplied by the power grid to the wind turbine) the backup power supply 104 is configured to supply power to the pitch drive motor 102 such that the pitch drive motor 102 adjusts an associated rotor blade to put it in a feathering position as is known in the art.

The backup power supply 104 has an associated voltage, wherein the voltage is dependent on the amount of charge stored in it. As the backup power supply 104 is discharged, the amount of charge stored within it is reduced, resulting in a reduction of a voltage across it. Preferably the pitch drive unit comprises a voltage sensor 105, configured to measure the voltage across the backup power supply 104.

The pitch drive unit 100 further comprises a resistor 107 which is coupled to the backup supply 104 by a first electrical connector 108. There is further provided a first switch 109 configured to isolate the resistor 107 from the backup power supply 104 when desired. The resistor 107 is preferably a braking or chopper resistor as is known in the art. Chopper resistors are commonly used to control voltage when the pitch drive motor 102 goes into generator mode, for example if a gust of wind incident on a rotor blade causes the pitch drive motor 102 to move and thereby generate current. Apart from the current now flowing back into the drive unit 100, a motor in generator mode may produce voltage peaks that are higher than the voltage rating of the electrical components used in the drive unit 100. If generator mode is detected, the chopper resistor will be connected by the first switch 109 (or alternatively a further switch) to the pitch drive motor 102 to absorb the energy produced by the motor 102 and thus avoid damage to other electrical components in the pitch drive unit 100. Alternatively the resistor may be another resistive element suitable for dissipating power as the backup power supply 104 is discharged, such as an armature in the rotor or stator of the pitch drive motor 102 (or both), or a resistor provided specifically for the purpose of discharging the backup power supply 104. When it is desired to discharge the backup power supply 104 in a non-emergency situation, for instance when it is desired to make the backup power supply safe when maintenance personnel are to be present in the wind turbine, the switch 109 is closed, thereby facilitating a rapid discharge of the energy stored in the backup power supply 104 through the resistor 107. The current flowing through the resistor 107 causes the resistor to heat up - the higher the current flowing through the resistor (i.e. the faster the backup power supply 104 is discharged), the more heat is generated in the resistor 107. The heat generated in the resistor 107 can in turn heat other components of the pitch drive unit 100/wind turbine 1, for example by convection, such as a casing of the pitch drive unit 100 and fixings such as screws etc. used to secure the casing and/or pitch drive unit components.

In the preferred embodiment there is also provided a cooling fan 110 electrically coupled to the backup power supply 104 via a second power connection 112. Preferably, the cooling fan is coupled to the backup power supply via a DC/DC converter 112a, such as a 420V/24V DC/DC converter, allowing the cooling fan to be operated over a large range of voltages supplied to the DC/DC converter by the backup power supply (for example over a range of 40-500V). Preferably the connection 112 between the cooling fan 110 and the backup power supply 104 includes a switch 113 that enables the cooling fan 110 to be isolated from the backup power supply 104. The cooling fan optionally further includes a grid power supply connection 114 configured to allow the cooling fan 110 to draw electricity from a grid power supply. For example the grid power supply connection 114 may be a connection to a DC bus via a DC/DC converter 114a which allows the cooling fan 110 to drawn power from the grid power supply (not shown). When in operation, the cooling fan 110 provides an air flow 116 over the resistor 107 thereby cooling the resistor 107.

When the backup power supply 104 is being discharged through the resistor 107 as described above, the cooling fan is powered such that the air flow 116 is provided over the resistor 107. The cooling fan is either powered by a grid power supply via the connection 114, or more preferably power is supplied to the cooling fan 110 from the backup power supply 104 by closing the switch 113 (this latter option allows the cooling fan to operate when the grid power supply has been disconnected or is otherwise unavailable). In the latter case, the pitch drive unit 100 preferably configured such that the majority of the electric charge stored in the backup power supply 104 is discharged through the resistor 107, whilst a relatively small current is drawn by the cooling fan 110 such that the current flowing through the cooling fan 110 does not exceed a pre-determined acceptable level, thereby preventing excess current damaging the cooling fan 110.

Preferably the pitch drive unit includes control logic 118 within the pitch drive unit 100, the control logic 118 being in communication with the components of the pitch drive unit 100. Alternatively the control logic 118 can be located in another location within the wind turbine in which the pitch drive unit 100 is employed. In a less preferred embodiment, the control logic 118 is provided at a location remote from the wind turbine. Control logic 118 is configured to control the operation of the various components of the pitch drive unit 100. In particular, the control logic 118 is configured to control the discharge rate of the backup power supply 104, the connection between the backup power supply to the resistor 107 and cooling fan 110, the operation of the pitch drive motor 102, amongst other things. The control logic 118 is also configured to receive an indication of the voltage across the backup power supply 104 from the voltage sensor 105. When the control logic 118 is present at the wind turbine, it is preferably powered by either the backup power supply 104, an AC power supply (not shown), or a further power supply (for example a battery, such as a 9V block). Preferably, whilst the backup power supply is being discharged, power is supplied to the control logic 118 by the backup power supply 104 itself, thereby conserving energy and assisting in discharging the backup power supply 104.

Optionally the pitch drive unit further comprises a thermo sensor 120 configured to measure the temperature of the resistor 107 and/or other components of the pitch drive unit 100 as discussed below.

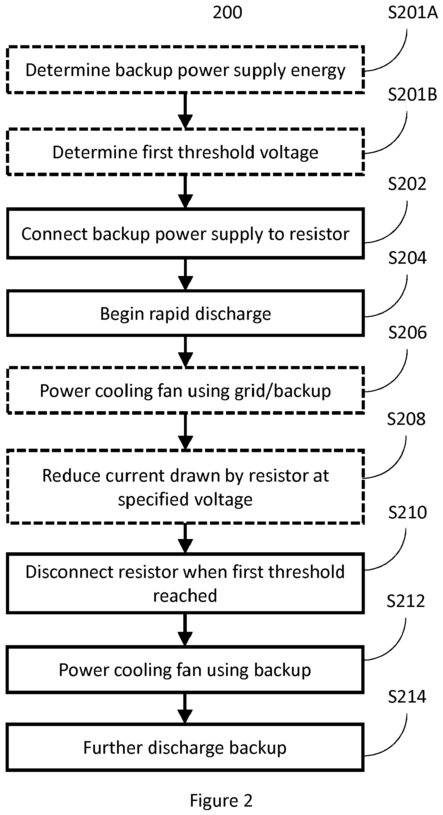

The embodiment of figure 1A optionally further comprises an indication 121, for example an LED or a display, wherein the indicator 121 is configured to provide an indication of the status of the discharge of the backup power supply 104 as described below with reference to figure 2.

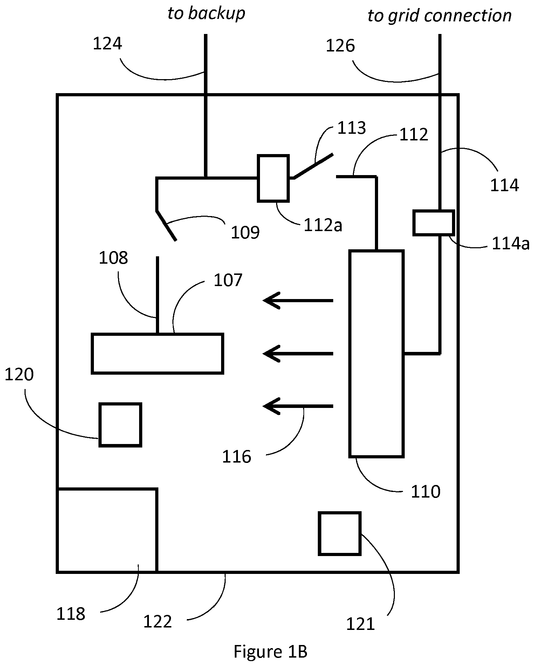

Figure 1B shows a discharge apparatus 122 in accordance with a second embodiment of the present invention. The apparatus 122 comprises, a resistor 107, a switch 109, a cooling fan 110, switch 113, electrical/power connections 108, 112 and control logic 122. In this second embodiment, the resistor 107, switch 109, cooling fan 110, switch 113, electrical/power connections perform the functions of the like elements described above in relation to figure 1A, the difference being that they are provided in a separate discharge apparatus 122 rather than in a pitch drive unit itself. The discharge apparatus 122 is configured to engage with a pre-existing pitch drive unit 100. In particular the apparatus 122 is provided with a connection 124 configure to engage with the backup power supply 104 in a pitch drive unit 100, which allows the backup power supply 104 to be discharged through the resistor 107 and the cooling fan 110.

The discharge apparatus of the second embodiment optionally comprises a further connection 126 configured to engage with a grid power supply, and thereby provide the cooling fan 110 with power from a grid power supply via a suitable connection 114.

Preferably the discharge apparatus 122 includes a DC/DC converter 112a, 114a for any connection that provides power to the cooling fan 110 in order to supply an appropriate voltage to the cooling fan 110 (as discussed above in relation to the first embodiment of figure 1A).

The discharge apparatus of the second embodiment optionally further comprises a thermo sensor 120 configured to measure the temperature of the resistor 107 and/or other components of the discharge apparatus 122. In one example, the thermo sensor is also configured to measure the temperature of one or more components of a pitch drive unit to which the discharge apparatus 122 is connected.

The discharge apparatus of the second embodiment optionally further comprises an indicator 121 as described above in relation to figure 1A.

In the second embodiment, beneficially the discharge apparatus can be retrofitted to an existing pitch drive unit 100 to allow the advantageous discharge procedure of the present invention without the need to replace an en entire pitch drive unit. The discharge apparatus may also be a portable device which is carried by the maintenance personal to the site and connected to either an interface provided by the arrangement in the wind turbine or connected to the individual internal leads, after a cover or faceplate has been removed by the authorized maintenance personal.

A method 200 for discharging a backup power supply in a pitch drive unit is shown in Figure 2. Preferably, the pitch drive unit 100 shown in figure 1A (and similarly the discharge apparatus 122 shown in figure 1B) is operated in accordance with the method 200 of Figure 2. The method 200 may optionally be started by providing a signal to the control logic 118 indicative of a user's desire to discharge the backup power supply 104 (the signal may originate from a source remote from the wind turbine or an input device provided at the wind turbine itself, the remote source/input device being in communication with the control logic 118).

Optionally, the method can include steps S201A and S201B before the method proceeds to step S202. In Step S201A, the control logic 118 determines the charge (and therefore the energy) stored in the backup power supply 104 before it is discharged, for instance by measuring the voltage across the backup power supply 104 using voltage sensor 105 in combination with knowledge of the backup power supply's capacitance. In step S201B, the control logic 118 determines a first threshold voltage based on the energy/charge currently stored in the backup power supply 104 as described in more detail below.

Alternatively, steps S201A and S201B are not performed, and instead the first threshold voltage takes a fixed voltage that is predetermined as described in more detail below.

The method 200 proceeds to step S202 in which the backup power supply 104 is connected to the resistor 107, for instance by closing the first switch 109 in the first electrical connection 108 between the backup power supply 104 and the resistor 107. A rapid discharge of the backup power supply 104 through the resistor 107 is then commenced in step S204 in a manner as known in the art.

Preferably, the cooling fan 110 is powered (preferably by drawing current from the backup power supply 104 or alternatively from a grid power supply if available as discussed above) whilst the rapid discharge is being performed, as shown in step S206. Advantageously, this cools the resistor 107 and other internal components within the pitch drive unit 100 whilst the rapid discharge is taking place. Alternatively, the cooling fan 110 is not employed during this stage of operation, although this is less preferred as this increases the total time required to cool the resistor.

Optionally, the pitch drive unit 100 is configured to reduce the current flowing through the resistor 107 when the voltage across the backup power supply 104 as measured by the voltage sensor 105 reaches a certain specified voltage, as shown in step S208. In other words, the rate of discharge of the backup power supply 104 is slowed once the voltage across the backup power supply 104 has reached a predetermined value. This extends the amount of time taken to fully discharge the backup power supply 104; however, advantageously, this enables the resistor 107 to produce less heat during the latter stages of the discharge, thereby allowing the temperature of the resistor 107 to be further reduced by the time the discharge process finishes. Such a reduction in current drawn can be performed, for example, by applying pulse width modulation, e.g. by periodically connecting and disconnecting the resistor 107. Alternatively, step S208 is not performed, thereby permitting faster discharge of the backup power supply 104.

The rapid discharge continues until the voltage across the backup power supply 104 as measured by the voltage sensor 105 reaches a first predetermined threshold voltage. At this point, the resistor 107 is disconnected from the backup power supply 104 in step S210 (for example by opening the relevant switch 109). Simultaneously or subsequently, the cooling fan 110 is powered using only the backup power supply 104 as shown in step S212. Accordingly, if the cooling fan 110 has previously been connected to the backup power supply 104 then it remains connected, and if the cooling fan 110 previously drew power from a grid power connection 114 it switches to draw power from the backup power supply 104 instead. Subsequently, the backup power supply 104 is discharged through the cooling fan 110 as shown in step S214, until the backup power supply 104 has been fully discharged or has reached a voltage (for example a second threshold voltage) considered to be small enough to satisfy the relevant safety requirements. In particular, the final voltage of the backup power supply is less than 120 V, preferably less than 60 V and most preferably substantially 0 V. In some circumstances the final voltage of the backup power supply 104 is determined by the minimum voltage that is able to power the cooling fan 110, or a minimum voltage that is able to power the control logic 118. For instance if the cooling fan is only able to operate based on an input voltage greater than 40V backup voltage, the discharge can be stopped when the voltage of the backup power supply reaches 60V. Advantageously, a voltage this small is considered safe for personnel to work around according to EN60204-1 and EN61800-5-1 standards. Alternatively, discharge of the backup power supply can continue through windings of a motor (such as a stator winding) in the cooling fan 110 even when the voltage is not great enough to cause the cooling fan to operate - in this case the energy is dissipated as heat in the windings of the cooling fan 110.

Advantageously, this arrangement provides that in the latter stages of the discharge of the backup power supply 104, no current is flowing through the resistor 107. Accordingly, the resistor 107 is not generating further heat. Furthermore, the cooling fan 110 continues to operate until the backup power supply 104 has been fully discharged such that the resistor 107 (and other components within the pitch drive unit 100) are cooled for an additional period after heat has ceased to be generated. Consequently, the present invention allows for both full, rapid discharge of the backup power supply 104 whilst further reducing the temperature of the resistor 107 and other internal components of the pitch drive unit 100 before maintenance personnel enter the wind turbine.

The first threshold voltage used in step S210 is preferably determined based on a required cooling fan 110 operation time - the threshold voltage is preferably chosen such that it corresponds to a level of remaining charge in the backup power supply 104 to power the cooling fan 110 for a time sufficient to adequately cool the resistor 107 (for example to cool the resistor to 70 degrees C, as recommended by DIN EN ISO 13732-1 standard, which relate to maximum allowable temperatures of touchable surfaces) and/or other components in the pitch drive unit 100. The time required to adequately cool the resistor 107 and other components will depend on various factors, including the internal design of the wind turbine/pitch drive unit 100, the total amount of charge that has to be discharged from the backup power supply 104, the properties of the resistor 107, the properties of the cooling fan 110 and the environmental conditions where the wind turbine is situated.

An example for a cooling strategy could be to aim at the shortest time period from invoking the discharge of the backup power supply 104 up to when the backup power supply 104 is at or below a target voltage, and at the same time, the resistor 107 has reliably been cooled down to a target temperature. The target voltage may be chosen such as 60 V based on accepted safe voltage levels as defined by the EN60204-1 and EN61800-5-1 standards. If there is a risk that personnel are likely to enter the wind turbine after the rapid discharge has been completed but before the cooling process has finished, the target voltage may be chosen even lower to ensure that the 60 V are attained already at the end of the rapid discharge. The target temperature on the other hand for example is chosen to be a level deemed safe to accidently touch the resistor 107, for example 70 degrees C, as recommended by the DIN EN ISO 13732-1 standard. A person skilled in the art will appreciate that choosing the first threshold, and as the case may be choosing the second threshold must take into account some or all of the various factors described above. The first and the second threshold respectively therefore may be different for individual models/configurations of wind turbines and ambient temperatures and the only way to determine the first and/or second thresholds is to carry out a series of systematic tests.

In a first example, the first threshold value is fixed (in which case optional steps S201A and 201B above are not performed), and is based on characteristic properties of the pitch drive unit 100. In this case a time required for cooling the components is preferably determined via thermal testing of the system for worst case environmental conditions. For example, a test pitch drive unit 100 is subjected to worst case discharge conditions (for instance, the backup power supply 104 may be fully charged and the ambient temperature may be the highest value expected for an installed wind turbine or even greater), and the minimum backup power supply voltage required to power the cooling fan 110 for long enough to cool the resistor 107 down to the target temperature is measured for these conditions. This voltage is then used as the first threshold value. Alternatively or in addition, the first threshold value can be based on the properties of the cooling fan 110. For example, the threshold voltage may be equivalent to, or less than, a maximum input voltage of the cooling fan 110.

In a second example, the first threshold is dynamic, and is calculated in control logic 118 each time the discharge is to be performed (in which case optional steps S201A and 201B above are performed). The temperature reached by the resistor 107 (and hence the amount of time the cooling fan 110 has to operate to cool the resistor 107) depends on the amount of charge discharged through the resistor 107. In this example the control logic 118 determines the charge stored in the backup power supply 104 before the discharge commences. Using this information, the control logic 118 predicts the energy that needs to be consumed by the cooling fan 110 (and hence the minimum voltage the backup power supply must have when step S212 is started) during steps S212 and S214. Ideally this minimises the total time taken to perform the discharging and cooling operations. This prediction can be based on worst-case scenario testing as discussed above, wherein the testing is performed at a variety of different backup power supply 104 starting charges. Alternatively the prediction can be based on a calculation of the expected temperature of the resistor 107 based on the total charge that has to be discharged through it, wherein the expected temperature is dependent on the square of the current through the resistor 107 integrated over the time for which said current is flowing. In this latter case, the ambient temperature of the pitch drive unit (for example the ambient temperature inside a pitch drive unit housing the resistor and optionally other components of the pitch drive unit) may also be accounted for in the prediction - the ambient temperature may be measured by a suitable temperature sensor such as optional thermo sensor 120.

Alternatively, or in addition to the two examples above, the first threshold may be calculated based on one or more of: the temperature of the resistor 107 as measured in real time during the rapid discharge via optional thermo sensor 120. As mentioned above the target voltage for the power supply 104 after discharge may be chosen to be 60V. Alternatively the specific value may be greater than 60 V, for example 120 V, although this is less preferred as the total time to discharge the backup power supply 104 would be increased - because the power consumed by the cooling fan 110 is typically lower than the power consumed by the resistor 107. The greater the amount of charge the backup power supply 104 has to discharge through the cooling fan 110 (i.e. the higher the backup power supply voltage is when discharge through the resistor 107 is stopped), the longer it will take to finish discharging the backup power supply 104.

As noted above, the pitch drive unit 100/discharge apparatus 122 optionally includes an indicator 121. In this case, at the end of step S214, (i.e. once the second threshold has been reached/the backup power supply 104 has been fully discharged), the indicator 121 is configured to provide an indication to a user that the backup power supply 104 has been discharged. In addition, the indicator 121 is also optionally configured to provide further indications, for example once the voltage across the backup power supply 104 has reached a level deemed safe (for example 60 V as referred to in the EN60204-1 and EN61800-5-1 standards) or once the temperature of the resistor 107 has reached the target temperature. Advantageously this provides a user with increased awareness of the status of the discharge of the backup power supply 104 and hence potential risks associated with working on the pitch drive unit at certain points in time.

The operations of the various components of the pitch drive unit 100 may be controlled by control logic 118 present at the pitch drive unit 100/discharge apparatus 122 or located elsewhere as described above. Similarly, the steps of method 200 may be implemented by control logic 118. It is noted that the control logic 118 can instigate the performance of method 200 upon receiving a signal from a remote location to discharge the backup power supply 104. During discharge of the backup power supply 104, the control logic 118 preferably draws power from the backup power supply 104, or alternatively from an AC power supply or a separate battery (e.g. 9V battery).

The above embodiments are provided as examples only, and are not intended to limit the scope of the invention. Further aspects of the present invention will be apparent from the appended claims.

## Claims

1. An arrangement for discharging an electrical energy storage (104) in a wind turbine (1) comprising:
a resistor (107); and
a cooling fan (110) arranged to provide an air flow over the resistor (107);
wherein the arrangement is configured to discharge the electrical energy storage (104) by:
connecting (S202) the electrical energy storage (104) to the resistor (107) such that a current from the electrical energy storage (104) flows through the resistor (107);
disconnecting (S210) the electrical energy storage (104) from the resistor (107) when a voltage across the electrical energy storage (104) reaches a first predetermined voltage; and
powering (212) the cooling fan (110) with the electrical energy storage (104) at least during a period after the predetermined voltage has been reached, thereby cooling the resistor (107) and further discharging the electrical energy storage (104).

2. The arrangement of claim 1, wherein the arrangement is further configured to: prior to the voltage across the electrical energy storage (104) reaching the first predetermined voltage, powering (S206) the cooling fan (110) via the electrical energy storage (104), such that the electrical energy storage (104) provides a first current to the resistor (107) and a second current to the cooling fan (110).

3. The arrangement of any preceding claim wherein the first predetermined voltage is at least one of: a fixed value based on characteristic properties of the wind turbine (1); and between 60 and 120V.

4. The arrangement of any of claims 1 to 2 further comprising control logic (118) configured to calculate the first predetermined voltage based on the charge stored in the electrical energy storage (104) prior to connecting the electrical energy storage (104) to the resistor (107).

5. The arrangement of any preceding claim further configured to power the cooling fan (110) with the electrical energy storage (104) until the voltage across the electrical energy storage (104) reaches a second predetermined voltage.

6. The arrangement of claim 5, wherein the second predetermined voltage:
is between 0V and 60V;
is about 0V; or
corresponds to a minimum operating voltage of the cooling fan (110).

7. The arrangement of any preceding claim further configured to reduce (S208) the current from the electrical energy storage (104) through the resistor (107) when the voltage across the electrical energy storage (104) reaches a third predetermined voltage, wherein the third predetermined voltage has a higher magnitude than the first predetermined voltage.

8. The arrangement of any preceding claim further comprising a temperature sensor (120) configured to measure the ambient temperature in a pitch drive housing comprising the resistor (107) and/or to measure the temperature of the resistor (107).

9. A pitch drive unit (5a, 5b, 100) for a wind turbine (1) comprising:
an electrical energy storage (104); and
the arrangement of any of claims 1 to 8.

10. The pitch drive unit of claim 9 wherein the resistor (107) is a chopper resistor.

11. A wind turbine (1) comprising:
an electrical energy storage (104) and the arrangement of any of claims 1 to 8;
the pitch drive unit (5a, 5b, 100) of any of claims 9 to 10; or
a pitch drive system comprising a plurality of pitch drive units (5a, 5b, 100), the plurality of pitch drive units (5a, 5b, 100) comprising the pitch drive unit (5a, 5b, 100) of any of claims 9 to 10.

12. A method (200) for discharging an electrical energy storage (104) in a pitch drive unit (5a, 5b, 100) comprising:
connecting (S202) an electrical energy storage to a resistor (107);
disconnecting (S210) the electrical energy storage (104) from the resistor (107) when a voltage across the electrical energy storage (104) reaches a first predetermined voltage; and
powering (S212) a cooling fan (110) with the electrical energy storage (104) at least during a period after the first predetermined voltage has been reached, thereby cooling the resistor (107) and further discharging (S214) the electrical energy storage (104).

13. The method of any of claim 12 wherein the first predetermined voltage is a fixed value based on characteristic properties of the pitch drive unit (5a, 5b, 100).

14. The method of any of claim 12 or 13 further comprising calculating the first predetermined voltage based on the charge stored in the electrical energy storage (104) such that the shortest time period is achieved from invoking the discharge up to when the resistor (107) has been cooled down to a target temperature.

15. The method of any of claims 12 to 14 further comprising powering the cooling fan (110) with the electrical energy storage (104) until the voltage reaches a second predetermined voltage.

## Patentansprüche

1. Anordnung zum Entladen eines elektrischen Energiespeichers (104) in einer Windturbine (1), umfassend:
einen Widerstand (107); und
ein Kühlgebläse (110), das dazu angeordnet ist, einen Luftstrom über den Widerstand (107) bereitzustellen;
wobei die Anordnung dazu konfiguriert ist, den elektrischen Energiespeicher (104) zu entladen durch:
Verbinden (S202) des elektrischen Energiespeichers (104) mit dem Widerstand (107), so dass ein Strom aus dem elektrischen Energiespeicher (104) durch den Widerstand (107) fließt;
Trennen (S210) des elektrischen Energiespeichers (104) von dem Widerstand (107), wenn eine Spannung über den elektrischen Energiespeicher (104) eine erste vorgegebene Spannung erreicht; und
Antreiben (212) des Kühlgebläses (110) mit dem elektrischen Energiespeicher (104) mindestens während eines Zeitraums nach Erreichen der vorgegebenen Spannung, wodurch der Widerstand (107) gekühlt und der elektrische Energiespeicher (104) weiter entladen wird.

2. Anordnung nach Anspruch 1, wobei die Anordnung ferner konfiguriert ist zum:
Antreiben (S206) des Kühlgebläses (110) über den elektrischen Energiespeicher (104), bevor die Spannung am elektrischen Energiespeicher (104) die erste vorgegebene Spannung erreicht, so dass der elektrische Energiespeicher (104) einen ersten Strom für den Widerstand (107) und einen zweiten Strom für das Kühlgebläse (110) bereitstellt.

3. Anordnung nach einem der vorstehenden Ansprüche, wobei die erste vorgegebene Spannung mindestens eines von: einem Festwert basierend auf charakteristischen Eigenschaften der Windturbine (1); und
einem Wert zwischen 60 und 120 V ist.

4. Anordnung nach einem der Ansprüche 1 bis 2, ferner umfassend eine Steuerlogik (118), die dazu konfiguriert ist, die erste vorgegebene Spannung basierend auf der im elektrischen Energiespeicher (104) gespeicherten Ladung zu berechnen, bevor der elektrische Energiespeicher (104) mit dem Widerstand (107) verbunden wird.

5. Anordnung nach einem der vorstehenden Ansprüche, die ferner dazu konfiguriert ist, das Kühlgebläse (110) mit dem elektrischen Energiespeicher (104) zu betreiben, bis die Spannung am elektrischen Energiespeicher (104) eine zweite vorgegebene Spannung erreicht.

6. Anordnung nach Anspruch 5, wobei die zweite vorgegebene Spannung:
zwischen 0 V und 60 V liegt;
etwa 0 V beträgt; oder
einer minimalen Betriebsspannung des Kühlgebläses (110) entspricht.

7. Anordnung nach einem der vorstehenden Ansprüche, die ferner dazu konfiguriert ist, den Strom aus dem elektrischen Energiespeicher (104) durch den Widerstand (107) zu reduzieren (S208), wenn die Spannung am elektrischen Energiespeicher (104) eine dritte vorgegebene Spannung erreicht, wobei die dritte vorgegebene Spannung eine höhere Größenordnung als die erste vorgegebene Spannung aufweist.

8. Anordnung nach einem der vorstehenden Ansprüche, ferner umfassend einen Temperatursensor (120), der dazu konfiguriert ist, die Umgebungstemperatur in einem Blattwinkelantriebsgehäuse zu messen, das den Widerstand (107) umfasst, und/oder um die Temperatur des Widerstands (107) zu messen.

9. Blattwinkelantriebseinheit (5a, 5b, 100) für eine Windturbine (1), umfassend:
einen elektrischen Energiespeicher (104); und
die Anordnung nach einem der Ansprüche 1 bis 8.

10. Blattwinkelantriebseinheit nach Anspruch 9, wobei der Widerstand (107) ein Bremswiderstand ist.

11. Windturbine (1), umfassend:
einen elektrischen Energiespeicher (104) und die Anordnung nach einem der Ansprüche 1 bis 8;
die Blattwinkelantriebseinheit (5a, 5b, 100) nach einem der Ansprüche 9 bis 10; oder
ein Blattwinkelantriebssystem, das eine Vielzahl von Blattwinkelantriebseinheiten (5a, 5b, 100) umfasst, wobei die Vielzahl von Blattwinkelantriebseinheiten (5a, 5b, 100) die Blattwinkelantriebseinheit (5a, 5b, 100) nach einem der Ansprüche 9 bis 10 umfasst.

12. Verfahren (200) zum Entladen eines elektrischen Energiespeichers (104) in einer Blattwinkelantriebseinheit (5a, 5b, 100), umfassend:
Verbinden (S202) eines elektrischen Energiespeichers mit einem Widerstand (107);
Trennen (S210) des elektrischen Energiespeichers (104) vom Widerstand (107), wenn eine Spannung am elektrischen Energiespeicher (104) eine erste vorgegebene Spannung erreicht; und
Antreiben (S212) eines Kühlgebläses (110) mit dem elektrischen Energiespeicher (104) mindestens während eines Zeitraums, nachdem die erste vorgegebene Spannung erreicht wurde, wodurch der Widerstand (107) gekühlt und der elektrische Energiespeicher (104) weiter entladen (S214) wird.

13. Verfahren nach einem der Ansprüche 12, wobei die erste vorgegeben Spannung ein fester Wert ist, basierend auf charakteristischen Eigenschaften der Blattwinkelantriebseinheit (5a, 5b, 100).

14. Verfahren nach einem der Ansprüche 12 oder 13, ferner umfassend Berechnen der ersten vorgegebenen Spannung basierend auf der in dem elektrischen Energiespeicher (104) gespeicherten Ladung, so dass die kürzeste Zeitspanne vom Aufrufen der Entladung bis zum Abkühlen des Widerstandes (107) auf eine Solltemperatur erreicht wird.

15. Verfahren nach einem der Ansprüche 12 bis 14, ferner umfassend Antreiben des Kühlgebläses (110) mit dem elektrischen Energiespeicher (104), bis die Spannung eine zweite vorgegebene Spannung erreicht.

## Revendications

1. Agencement pour décharger un stockage d'énergie électrique (104) dans une éolienne (1) comprenant :
une résistance (107) ; et
un ventilateur de refroidissement (110) agencé pour fournir un flux d'air sur la résistance (107) ; dans lequel l'agencement est configuré pour décharger le stockage d'énergie électrique (104) :
en connectant (S202) le stockage d'énergie électrique (104) à la résistance (107) de telle sorte
qu'un courant provenant du stockage d'énergie électrique (104) s'écoule à travers la résistance (107) ;
en déconnectant (S210) le stockage d'énergie électrique (104) de la résistance (107)
lorsqu'une tension à travers le stockage d'énergie électrique (104) atteint une première tension prédéterminée ; et
en alimentant (212) le ventilateur de refroidissement (110)
avec le stockage d'énergie électrique (104)
au moins pendant une période après que la tension prédéterminée a été atteinte, refroidissant ainsi la résistance (107) et déchargeant davantage le stockage d'énergie électrique (104).

2. Agencement selon la revendication 1, dans lequel l'agencement est en outre configuré pour :
avant que la tension à travers le stockage d'énergie électrique (104) atteigne la première tension prédéterminée, alimenter (S206) le ventilateur de refroidissement (110) par l'intermédiaire du stockage d'énergie électrique (104), de telle sorte que le stockage d'énergie électrique (104)
fournisse un premier courant à la résistance (107) et un deuxième courant au ventilateur de refroidissement (110).

3. Agencement selon l'une quelconque des revendications précédentes dans lequel la première tension prédéterminée est au moins l'une de : une valeur fixe basée sur des propriétés caractéristiques de l'éolienne (1) ;
et
entre 60 et 120 V.

4. Agencement selon l'une quelconque des revendications 1 à 2 comprenant en outre une logique de commande (118) configurée pour calculer la première tension prédéterminée en fonction de la charge stockée dans le stockage d'énergie électrique (104)
avant le raccordement électrique du stockage d'énergie électrique (104) à la résistance (107).

5. Agencement selon l'une quelconque des revendications précédentes configuré en outre pour alimenter le ventilateur de refroidissement (110)
avec le stockage d'énergie électrique (104) jusqu'à ce que la tension à travers le stockage d'énergie électrique (104) atteigne une deuxième tension
prédéterminée.

6. Agencement selon la revendication 5, dans lequel la deuxième tension prédéterminée :
est comprise entre 0 V et 60 V ;
est d'environ 0 V ; ou
correspond à une tension de fonctionnement minimale du ventilateur de refroidissement (110).

7. Agencement selon l'une quelconque des revendications précédentes configuré en outre pour réduire (S208) le courant provenant du stockage d'énergie électrique (104) à travers la résistance (107) lorsque la tension à travers le stockage d'énergie électrique (104)
atteint une troisième tension prédéterminée, dans lequel la troisième tension prédéterminée a une amplitude supérieure à la première tension prédéterminée.

8. Agencement selon l'une quelconque des revendications précédentes comprenant en outre un capteur de température (120) configuré pour mesurer la température ambiante dans un boîtier d'entraînement de pas comprenant la résistance (107) et/ou pour mesurer la température de la résistance (107).

9. Unité d'entraînement de pas (5a, 5b, 100) pour une éolienne (1) comprenant :
un stockage d'énergie électrique (104) ; et
l'agencement selon l'une quelconque des revendications 1 à 8.

10. Unité d'entraînement de pas selon la revendication 9 dans laquelle la résistance (107) est une résistance de décharge.

11. Éolienne (1) comprenant :
un stockage d'énergie électrique (104) et l'agencement selon l'une quelconque des revendications 1 à 8 ;
l'unité d'entraînement de pas (5a, 5b, 100) selon l'une quelconque des revendications 9 à 10 ; ou
un système d'entraînement de pas comprenant une pluralité d'unités d'entraînement de pas (5a, 5b, 100), la pluralité d'unités d'entraînement de pas (5a, 5b, 100) comprenant l'unité d'entraînement de pas (5a, 5b, 100) selon l'une quelconque des revendications 9 à 10.

12. Procédé (200) pour décharger un stockage d'énergie électrique (104) dans une unité d'entraînement de pas (5a, 5b, 100) comprenant :
la connexion (S202) d'un stockage d'énergie électrique à une résistance (107) ;
la déconnexion (S210) du stockage d'énergie électrique (104) de la résistance (107) lorsqu'une
tension à travers le stockage d'énergie électrique (104)
atteint une première tension prédéterminée ; et
l'alimentation (S212) d'un ventilateur de refroidissement (110) avec le stockage d'énergie électrique (104) au moins
pendant une période après que la tension prédéterminée a été atteinte, refroidissant ainsi la résistance (107) et déchargeant davantage (S214) le stockage d'énergie électrique (104).

13. Procédé selon la revendication 12 dans lequel la première tension prédéterminée est une valeur fixe basée sur des propriétés caractéristiques de l'unité d'entraînement de pas (5a, 5b, 100).

14. Procédé selon l'une quelconque des revendications 12 ou 13 comprenant en outre le calcul de la première tension prédéterminée en fonction de la charge stockée dans le stockage d'énergie électrique (104)
de telle sorte que la période de temps la plus courte soit obtenue de l'appel du déchargement jusqu'au moment où la résistance (107) a été refroidie à une température cible.

15. Procédé selon l'une quelconque des revendications 12 à 14 comprenant en outre l'alimentation du ventilateur de refroidissement (110)
avec le stockage d'énergie électrique (104)
jusqu'à ce que la tension atteigne une deuxième tension prédéterminée.
